(19) Europäisches Patentamt
European Patent Office
Office européen des brevets

(11) **EP 4 624 512 A1**

(12) **EUROPEAN PATENT APPLICATION**
published in accordance with Art. 153(4) EPC

(43) Date of publication:
01.10.2025  Bulletin 2025/40

(21) Application number: 23912837.4

(22) Date of filing: 22.12.2023

(51) International Patent Classification (IPC):
*C08G 63/183* (2006.01)    *C08G 63/82* (2006.01)

(52) Cooperative Patent Classification (CPC):
C08G 63/183; C08G 63/82

(86) International application number:
PCT/KR2023/021499

(87) International publication number:
WO 2024/144162 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  29.12.2022  KR 20220189081

(71) Applicant: Kolon Industries, Inc.
Seoul 07793 (KR)

(72) Inventors:
• KIM, Nam Cheol
  Seoul 07793 (KR)
• HWANG, Yeong Nam
  Seoul 07793 (KR)
• IM, Sujin
  Seoul 07793 (KR)
• KIM, Jun Beom
  Seoul 07793 (KR)

(74) Representative: Vossius & Partner
Patentanwälte Rechtsanwälte mbB
Siebertstrasse 3
81675 München (DE)

(54) **POLYESTER-BASED RESINS USING RECYCLED COMPOUND AND METHOD FOR PREPARING SAME**

(57)    The present disclosure relates to a polyester-based resin using recycled compounds and a method for preparing the same. According to the present disclosure, there is provided a method for preparing a high-quality polyester-based resin while using recycled compounds as raw materials and minimizing the use of petroleum-based compounds, which is advantageous for achieving environmental sustainability.

EP 4 624 512 A1

**Description**

**[TECHNICAL FIELD]**

The present disclosure relates to a polyester-based resin using recycled compounds and a method for preparing the same.

**[BACKGROUND OF ART]**

Various methods have been proposed for preparing polyester-based resins. Among them, the representative industrial methods for producing polyester-based resins include the direct esterification method, in which terephthalic acid reacts with ethylene glycol, commonly referred to as the TPA method, and the transesterification method, in which dimethyl terephthalate reacts with ethylene glycol, commonly referred to as the DMT method.

In the TPA method, an excess amount of ethylene glycol is used to facilitate the reaction with terephthalic acid, and the esterification reaction is carried out at high temperatures and high pressures over an extended period. During this reaction, an intermediate compound called bis(2-hydroxyethyl) terephthalate (BHET) is generated. However, conducting the esterification reaction for a long time under high temperatures and high pressures consumes a large amount of energy. Additionally, the excess ethylene glycol that does not participate in the reaction is converted into a by-product called diethylene glycol (DEG), which leads to a decline in the quality of the polyester-based resin.

The DMT method allows for ester exchange reactions to proceed under milder conditions compared to the TPA method. However, it still requires a long reaction time, limiting potential energy savings. Moreover, methanol, which is generated as a by-product during the reaction between dimethyl terephthalate and ethylene glycol, is a hazardous substance that poses significant challenges in handling and disposal.

Meanwhile, in accordance with the Long-term Low Greenhouse Gas Emission Development Strategy (LEDS), recycling waste plastics has been gaining attention as a means to reduce dependence on fossil fuels and address environmental pollution. One proposed method involves depolymerizing polyethylene terephthalate (PET) or glycol-modified polyethylene terephthalate (PETG) to obtain chemically recycled bis(2-hydroxyethyl) terephthalate (hereinafter referred to as r-BHET), which is then used as a raw material for preparing polyester-based resins.

However, when r-BHET is dissolved in water for the preparation of polyester-based resins, it undergoes hydrolysis, breaking down into terephthalic acid and ethylene glycol. As a result, the polyester-based resin produced through this process contains a large amount of by-products, such as diethylene glycol, which leads to a deterioration in color quality.

Furthermore, when r-BHET is dissolved using ethylene glycol to prepare polyester-based resins, the excessive amount of ethylene glycol promotes the formation of diethylene glycol as a by-product, thereby reducing the overall quality of the polyester-based resin.

Moreover, if an excessive amount of ethylene glycol is introduced into the reaction system, it not only contradicts the goal of minimizing the use of petroleum-based compounds for environmental sustainability, but also increases energy consumption due to the need for additional steps to remove the excess ethylene glycol. If the excess ethylene glycol is not properly removed from the reaction system, it can cause various process-related issues during polyester-based resin production, such as clogging of pipes or a reduction in vacuum efficiency.

Ultimately, there arises a contradiction of increased carbon emissions during the recycling process of waste plastics, and there is a limitation in producing high-quality polyester-based resins using recycled raw materials.

**[DETAILED DESCRIPTION OF THE INVENTION]**

**[Technical Problem]**

It is an object of the present disclosure to provide a method for preparing a polyester-based resin that utilizes recycled compounds as raw materials while minimizing the use of petroleum-based compounds, thereby promoting environmental sustainability and enabling the production of high-quality polyester-based resins.

It is another object of the present disclosure to provide a polyester-based resin obtained through the aforementioned method using recycled compounds as raw materials.

**[Technical Solution]**

According to an embodiment of the present disclosure, there is provided a method for preparing a polyester-based resin, comprising:

preparing a molten liquid by heating chemically recycled bis(2-hydroxyethyl) terephthalate;
forming an oligomer by heating a composition including the molten liquid and an esterification reaction catalyst; and
producing the polyester-based resin by polycondensing the oligomer.

According to another embodiment of the present disclosure, there is provided a polyester-based resin obtained through the aforementioned method for preparing a polyester-based resin, using a molten liquid of chemically recycled bis(2-hydroxyethyl) terephthalate.

Now, a polyester-based resin using recycled compounds and a method for preparing the same according to embodiments of the present disclosure will be described in more detail.

Unless explicitly stated herein, technical terms are intended to refer merely to specific embodiments and are not intended to limit the scope of the invention.

Singular forms used in this specification include plural forms as well, unless the context clearly dictates otherwise.

It should be understood that the terms "comprise," "include", "have", etc. are used herein to specify the presence of stated features, regions, integers, steps, operations, elements, and/or components, but do not preclude the presence or addition of one or more other features, regions, integers, steps, operations, elements, components, and/or groups thereof.

In this specification, the term "polyester-based resin" is used to encompass both polyester homopolymers and polyester copolymers. That is, the polyester-based resin may be a polyester homopolymer, a polyester copolymer, or a mixture thereof.

Chemically recycled bis(2-hydroxyethyl) terephthalate (hereinafter referred to as r-BHET) can be obtained from the depolymerization of waste plastics (for example, glycolysis). When producing a polyester-based resin using r-BHET as a raw material compound, dissolving r-BHET in water causes hydrolysis, converting it into terephthalic acid and ethylene glycol. As a result, the polyester-based resin produced from this process contains a large amount of by-products (for example, diethylene glycol), leading to degradation in color quality.

Additionally, when ethylene glycol is used to dissolve r-BHET for the production of a polyester-based resin, the presence of excess ethylene glycol increases the formation of the by-product diethylene glycol, leading to a deterioration in the quality of the polyester-based resin.

Furthermore, when more ethylene glycol than necessary is introduced into the reaction system, it not only contradicts the goal of minimizing the use of petroleum-based compounds for environmental sustainability but also increases energy consumption required to remove the excess ethylene glycol. If the excess ethylene glycol is not properly removed from the reaction system, it can lead to process-related issues during the production of the polyester-based resin, such as pipe clogging or a reduction in vacuum efficiency. Ultimately, this creates a paradox where carbon emissions increase during the recycling of waste plastic, making it challenging to produce high-quality polyester-based resin using recycled raw materials.

However, as a result of the inventors' research, it has been confirmed that the use of an r-BHET melt in the production of polyester-based resin can overcome the aforementioned limitations associated with the use of water or ethylene glycol, while also providing advantages in achieving environmental sustainability.

According to an embodiment of the present disclosure, there is provided a method for preparing a polyester-based resin, comprising:

preparing a molten liquid by heating chemically recycled bis(2-hydroxyethyl) terephthalate;
forming an oligomer by heating a composition including the molten liquid and an esterification reaction catalyst; and
producing the polyester-based resin by polycondensing the oligomer.

Hereinafter, each step included in the method for preparing the polyester-based resin according to the above embodiment will be described in detail.

First, a step of preparing an r-BHET melt is performed.

The r-BHET melt is obtained by applying heat to solid-state r-BHET to convert it into a liquid state. Since the r-BHET melt does not contain water, hydrolysis of r-BHET can be prevented. Additionally, as the r-BHET melt does not contain ethylene glycol, the use of petroleum-based compounds in the reaction system can be minimized.

The source of the r-BHET is not particularly limited, and it may be obtained through the chemical recycling of polyethylene terephthalate (PET) or glycol-modified polyethylene terephthalate (PETG).

The melting point of the r-BHET varies depending on its purity. Therefore, the heating temperature for preparing the r-BHET melt may be determined by considering both the known melting temperature of pure BHET (106°C to 109°C) and the temperature at which the thermal decomposition of pure BHET is known to begin (203°C). For example, the heating temperature may be selected within the range of 109°C to 203°C. To ensure the formation of the r-BHET melt, it is preferable for the heating temperature to be at least 109°C. However, if the heating temperature is excessively high, thermal decomposition of r-BHET may occur, leading to its conversion into terephthalic acid and ethylene glycol. As a result, the polyester-based resin produced using this material may contain a large amount of by-products, such as diethylene glycol, and exhibit degraded color quality. Therefore, it is preferable for the heating temperature not to exceed 203°C.

After being prepared by melting r-BHET in a melting facility, the r-BHET melt is introduced into a reactor. The type of melting facility is not particularly limited and may include a melting tank or a melting kneader. When producing a polyester copolymer, the order of introducing the r-BHET melt and the co-reactant into the reactor is not particularly limited. For example, the r-BHET melt may be introduced into the reactor first, followed by the co-reactant. Alternatively, the co-reactant may be introduced into the reactor first, followed by the r-BHET melt.

Subsequently, a step of forming an oligomer is carried out by heating a composition including the molten liquid and an esterification reaction catalyst.

According to one embodiment, the esterification reaction catalyst may be phosphoric acid or an organic phosphate. As non-limiting examples, the esterification reaction catalyst may include at least one compound selected from the group consisting of phosphoric acid, triphenyl phosphate, trimethyl phosphate, triethyl phosphate, and triethyl phosphonoacetate.

The esterification reaction catalyst may be added in an amount of 10 ppm to 500 ppm based on 1 kg of the finally obtained polyester-based resin.

According to one embodiment, the composition comprising the r-BHET melt and the esterification reaction catalyst may further comprise at least one co-reactant selected from the group consisting of a compound having two or more carboxyl functional groups and a compound having two or more hydroxyl functional groups.

The compound having two or more carboxyl functional groups and the compound having two or more hydroxyl functional groups may be included in the composition as a co-reactant.

The content of the co-reactant may be determined in consideration of the efficiency of the esterification reaction and the physical properties of the polyester-based resin. Preferably, the composition may include the co-reactant in an amount of 0.01 mol to 9.5 mol, or 0.1 mol to 9.5 mol, or 1 mol to 9 mol, or 2 mol to 9 mol, based on 1 mol of the r-BHET.

The co-reactant is not particularly limited and may include compounds known to be usable in the preparation of polyester-based resin.

Preferably, the compound having two or more carboxyl functional groups may be at least one compound selected from the group consisting of phthalic acid, isophthalic acid, terephthalic acid, 2,6-naphthalenedicarboxylic acid, biphenyl-4,4'-dicarboxylic acid, 4,4'-cis-stilbenedicarboxylic acid, 2,5-furandicarboxylic acid, 2,5-thiophenedicarboxylic acid, 1,4-cyclohexanedicarboxylic acid, 1,3-cyclohexanedicarboxylic acid, ethanedioic acid, propanedioic acid, fumaric acid, maleic acid, pentanedioic acid, octanedioic acid, decanedioic acid, adipic acid, succinic acid, tricarboxylic acid, trimellitic acid, hemimellitic acid, hemimellitic anhydride, trimesic acid, and tricarballylic acid.

The compound having two or more hydroxyl functional groups may be at least one compound selected from the group consisting of ethylene glycol, 1,2-propanediol, 1,3-propanediol, 1,2-butanediol, 1,4-butanediol, 1,5-pentanediol, 1,6-hexanediol, cyclopentanediol, 1,4-cyclohexanediol, 1,2-cyclohexanedimethanol, 1,3-cyclohexanedimethanol, 1,4-cyclohexanedimethanol, 2,2,4-trimethyl-1,3-pentanediol, polyethylene glycol, neopentyl glycol, dipropylene glycol, triethylene glycol, polypropylene glycol, hexylene glycol, pentaethylene glycol, polytetramethylene glycol, dihydroxybenzene, dihydroxynaphthalene, hydroxyquinol, glycerin, pentaerythritol, trimethylolpropane, trimethylolethane, and isosorbide.

The co-reactant may be introduced into the reactor in its original state without being dissolved in water or an organic solvent. The co-reactant introduced into the reactor is melted by the reaction temperature. If the co-reactant is introduced in a solution state dissolved in water or an organic solvent, the reactor temperature significantly decreases, requiring additional energy to raise the temperature again. In particular, introducing the co-reactant in a solution state dissolved in water or an organic solvent may hinder the manifestation of the effects of applying the r-BHET melt in the present invention.

The reaction conditions for the step of forming the oligomer may be determined in consideration of the efficiency of the esterification reaction. Preferably, the step of forming the oligomer may be performed under a pressure of 1.0 kgf/cm$^2$ to 3.0 kgf/cm$^2$ and a temperature of 150°C to 260°C. The time for the esterification reaction may be determined within an appropriate range depending on the amount and ratio of raw compounds, as well as the temperature and pressure conditions.

The step of forming the oligomer may be performed in a batch reactor or a continuous reactor. The r-BHET melt and other raw materials are separately introduced into the reactor. It is preferable to remove by-products (water) and side reaction products generated during the esterification reaction out of the system under low vacuum or using a distillation column.

Subsequently, the step of producing the polyester-based resin by polycondensing the oligomer is carried out.

The polycondensation may be performed in the presence of a polycondensation catalyst. For example, the polycondensation may be carried out in the presence of at least one compound selected from the group consisting of antimony triacetate, antimony trioxide, antimony tritartrate, antimony glycolate, titanium oxide, titanium chelate compounds, tetra-n-propyl titanate, tetra-isopropyl titanate, tetra-n-butyl titanate, tetra-isobutyl titanate, butyl-isopropyl titanate, and germanium dioxide. The polycondensation catalyst may be added in an amount corresponding to an antimony, titanium, or germanium atom content of 50 ppm to 600 ppm based on 1 kg of the finally obtained polyester-based resin.

The conditions for the polycondensation may be determined in consideration of the efficiency of the polycondensation reaction. Preferably, the polycondensation reaction may be performed under a pressure of 0.01 torr to 10 torr and a temperature of 150°C to 350°C. The time for the polycondensation reaction may be determined in an appropriate range depending on the amount and ratio of raw material compounds, and the temperature and pressure conditions.

As described above, the method for preparing the polyester-based resin is advantageous for achieving environmental sustainability by using r-BHET, a recycled compound, as a raw material while minimizing the use of petroleum-based co-reactants and reducing energy consumption. Furthermore, the method for preparing the polyester-based resin may prevent process-related issues caused by the excessive use of ethylene glycol, such as pipe clogging and vacuum degradation.

According to another embodiment of the present disclosure, there is provided a polyester-based resin obtained through the aforementioned method for preparing a polyester-based resin, using a molten liquid of chemically recycled bis(2-hydroxyethyl) terephthalate.

The polyester resin is obtained by using chemically recycled bis(2-hydroxyethyl) terephthalate (hereinafter referred to as r-BHET) as a raw material. Preferably, the polyester-based resin may be obtained according to the aforementioned preparation method.

The polyester-based resin may exhibit excellent quality as it is obtained by using r-BHET as a raw material while minimizing the use of petroleum-based co-reactants.

For example, the polyester-based resin may have an intrinsic viscosity of 0.45 to 0.85 dl/g. The intrinsic viscosity of the polyester-based resin may be measured at room temperature (approximately 25°C) using a conventional device such as an Ostwald viscometer.

Specifically, the polyester-based resin may have an intrinsic viscosity of 0.45 dl/g or more, or 0.50 dl/g or more, or 0.55 dl/g or more; and 0.85 dl/g or less, or 0.80 dl/g or less, or 0.75 dl/g or less. Preferably, the polyester-based resin may have an intrinsic viscosity of 0.45 to 0.85 dl/g, or 0.50 to 0.85 dl/g, or 0.50 to 0.80 dl/g, or 0.55 to 0.80 dl/g, or 0.55 to 0.75 dl/g.

In another example, when an excessive amount of ethylene glycol is used in the production of the polyester-based resin, the amount of by-product diethylene glycol (DEG) increases, leading to a deterioration in the quality of the polyester-based resin.

However, since the polyester-based resin according to the embodiment of the invention is produced without using an excessive amount of ethylene glycol in the reaction with the co-reactant in the reaction system, the content of by-products contained in the polyester-based resin can be minimized. Preferably, the polyester-based resin may contain diethylene glycol as a by-product in an amount of less than 4.0 wt%, or in a range of 0.1 wt% to 4.0 wt%, or 0.5 wt% to 3.0 wt%, or 0.5 wt% to 2.0 wt%, or 0.5 wt% to 1.0 wt%, based on the weight of the polyester-based resin.

In yet another example, since r-BHET is obtained through several chemical steps from waste plastics, using it as a raw material to produce a polyester-based resin results in a deterioration of color quality.

However, the polyester-based resin may have a color b* value of less than 6.0, or 3.0 to 5.5, or 3.0 to 5.0, or 3.5 to 5.0 according to the L*a*b* colorimetric system by CIE LAB, as measured using a spectrophotometer on a specimen made of the polyester-based resin.

In the L*a*b* colorimetric system, the L* value represents brightness, where L* = 0 indicates black and L* = 100 indicates white. The a* value indicates whether the color is shifted toward red or green; a negative a* value corresponds to a greenish hue, while a positive a* value corresponds to a reddish hue. The b* value indicates whether the color is shifted toward yellow or blue; a negative b* value corresponds to a bluish hue, while a positive b* value corresponds to a yellowish hue. The closer the a* and b* values are to zero, the closer the color is to white.

## [ADVANTAGEOUS EFFECTS]

According to the present disclosure, there is provided a method for preparing a high-quality polyester-based resin while using recycled compounds as raw materials and minimizing the use of petroleum-based compounds, which is advantageous for achieving environmental sustainability.

## [DETAILED DESCRIPTION OF THE EMBODIMENTS]

Hereinafter, preferred embodiments are provided for better understanding of the invention. However, the following embodiments are merely illustrative of the invention and do not limit the invention to these embodiments alone.

Example 1

Using a melting facility, r-BHET was melted to prepare an r-BHET melt.

5.2 mol of the r-BHET melt were introduced into an esterification reactor under heating, and phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 1 hour to form an oligomer. During this process, by-products (water) and side reaction products were removed from the system.

Subsequently, the oligomer was polycondensed in a polycondensation reactor in the presence of antimony trioxide at 0.3 torr and 280°C to obtain a polyester-based resin (intrinsic viscosity: 0.64 dl/g, polymerization time: 98 minutes). The antimony trioxide was added in an amount corresponding to an antimony atom content of 300 ppm based on 1 kg of the finally obtained polyester-based resin.

Example 2

Using a melting facility, r-BHET was melted to prepare an r-BHET melt.

The r-BHET melt, adipic acid, and ethylene glycol were separately introduced into an esterification reactor through respective inlets under heating (r-BHET 1.66 mol : adipic acid 7.50 mol : ethylene glycol 7.50 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.62 dl/g, polymerization time: 110 minutes). The antimony trioxide was added in an amount corresponding to an antimony atom content of 300 ppm based on 1 kg of the finally obtained polyester-based resin.

Example 3

Using a melting facility, r-BHET was melted to prepare an r-BHET melt.

The r-BHET melt, isophthalic acid, and ethylene glycol were separately introduced into an esterification reactor through respective inlets under heating (r-BHET 3.08 mol : isophthalic acid 3.08 mol : ethylene glycol 3.08 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.65 dl/g, polymerization time: 125 minutes). The antimony trioxide was added in an amount corresponding to an antimony atom content of 300 ppm based on 1 kg of the finally obtained polyester-based resin.

Example 4

Using a melting facility, r-BHET was melted to prepare an r-BHET melt.

The r-BHET melt, adipic acid, isophthalic acid, and ethylene glycol were separately introduced into an esterification reactor through respective inlets under heating (r-BHET 2.10 mol : adipic acid 2.45 mol : isophthalic acid 2.44 mol : ethylene glycol 4.89 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.60 dl/g, polymerization time: 121 minutes). The antimony trioxide was added in an amount corresponding to an antimony atom content of 300 ppm based on 1 kg of the finally obtained polyester-based resin.

Example 5

Using a melting facility, r-BHET was melted to prepare an r-BHET melt.

The r-BHET melt, terephthalic acid, and neopentyl glycol were separately introduced into an esterification reactor through respective inlets under heating (r-BHET 2.00 mol : terephthalic acid 4.66 mol : neopentyl glycol 4.66 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.61 dl/g, polymerization time: 113 minutes). The antimony trioxide was added in an amount corresponding to an antimony atom content of 300 ppm based on 1 kg of the finally obtained polyester-based resin.

Example 6

Using a melting facility, r-BHET was melted to prepare an r-BHET melt.

The r-BHET melt, terephthalic acid, and isosorbide were separately introduced into an esterification reactor through respective inlets under heating (r-BHET 2.00 mol : terephthalic acid 4.66 mol : isosorbide 4.66 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.66 dl/g, polymerization time: 115 minutes). The antimony trioxide was added in an amount corresponding to an antimony atom content of 300 ppm based on 1 kg of the finally obtained polyester-based resin.

Example 7

Using a melting facility, r-BHET was melted to prepare an r-BHET melt.

The r-BHET melt, 2,5-furandicarboxylic acid, and ethylene glycol were separately introduced into an esterification reactor through respective inlets under heating (r-BHET 2.09 mol : 2,5-furandicarboxylic acid 4.89 mol : ethylene glycol 4.89 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.65 dl/g, polymerization time: 112 minutes). The antimony trioxide was added in an amount corresponding to an antimony atom content of 300 ppm based on 1 kg of the finally obtained polyester-based resin.

Example 8

Using a melting facility, r-BHET was melted to prepare an r-BHET melt.

The r-BHET melt, terephthalic acid, and 1,4-cyclohexanedimethanol were separately introduced into an esterification reactor through respective inlets under heating (r-BHET 2.00 mol : terephthalic acid 4.66 mol : 1,4-cyclohexanedimethanol 4.66 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.63 dl/g, polymerization time: 114 minutes). The antimony trioxide was added in an amount corresponding to an antimony atom content of 300 ppm based on 1 kg of the finally obtained polyester-based resin.

Comparative Example 1

A solution of r-BHET with a concentration of 50 wt% was prepared by mixing r-BHET and water (W).

The r-BHET solution was introduced into an esterification reactor under heating (r-BHET 5.2 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 1 hour to form an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.61 dl/g, polymerization time: 168 minutes). The antimony trioxide was added in an amount corresponding to an antimony atom content of 300 ppm based on 1 kg of the finally obtained polyester-based resin.

Comparative Example 2

A solution of r-BHET with a concentration of 80 wt% was prepared by mixing r-BHET and water (W).

The r-BHET solution was introduced into an esterification reactor under heating (r-BHET 5.2 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 1 hour to form an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.64 dl/g, polymerization time: 180 minutes). The antimony trioxide was added in an amount corresponding to an antimony atom content of 300 ppm based on 1 kg of the finally obtained polyester-based resin.

Comparative Example 3

A solution of r-BHET with a concentration of 50 wt% was prepared by mixing r-BHET and ethylene glycol (EG).

The r-BHET solution was introduced into an esterification reactor under heating (r-BHET 5.2 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 1 hour to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.68 dl/g, polymerization time: 165 minutes). The antimony trioxide was added in an amount corresponding to an antimony atom content of 300 ppm based on 1 kg of the finally obtained polyester-based resin.

Comparative Example 4

A solution of r-BHET with a concentration of 80 wt% was prepared by mixing r-BHET and ethylene glycol (EG).

The r-BHET solution was introduced into an esterification reactor under heating (r-BHET 5.2 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 1 hour to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.64 dl/g, polymerization time: 180 minutes). The antimony trioxide was added in an amount corresponding to an antimony atom content of 300 ppm based on 1 kg of the finally obtained polyester-based resin.

Comparative Example 5

A solution of r-BHET with a concentration of 50 wt% was prepared by mixing r-BHET and water (W).

The r-BHET solution, adipic acid, and ethylene glycol were introduced into an esterification reactor through separate inlets under heating (r-BHET 2.21 mol : adipic acid 5.15 mol : ethylene glycol 5.15 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.66 dl/g, polymerization time: 210 minutes). The antimony trioxide was added in an amount corresponding to an antimony atom content of 300 ppm based on 1 kg of the finally obtained polyester-based resin.

Comparative Example 6

A solution of r-BHET with a concentration of 50 wt% was prepared by mixing r-BHET and water (W).

The r-BHET solution, isophthalic acid, and ethylene glycol were introduced into an esterification reactor through separate inlets under heating (r-BHET 1.19 mol : isophthalic acid 4.66 mol : ethylene glycol 4.66 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water and methanol) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.63 dl/g, polymerization time: 193 minutes). The antimony trioxide was added in an amount corresponding to an antimony atom content of 300 ppm based on 1 kg of the finally obtained polyester-based resin.

Comparative Example 7

A solution of r-BHET with a concentration of 50 wt% was prepared by mixing r-BHET and ethylene glycol (EG).

The r-BHET solution, adipic acid, and ethylene glycol were introduced into an esterification reactor through separate inlets under heating (r-BHET 2.21 mol : adipic acid 5.15 mol : ethylene glycol 5.15 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.67 dl/g, polymerization time: 200 minutes). The antimony trioxide was added in an amount corresponding to an antimony atom content of 300 ppm based on 1 kg of the finally obtained polyester-based resin.

Comparative Example 8

A solution of r-BHET with a concentration of 50 wt% was prepared by mixing r-BHET and ethylene glycol (EG).

The r-BHET solution, isophthalic acid, and ethylene glycol were introduced into an esterification reactor through separate inlets under heating (r-BHET 1.19 mol : isophthalic acid 4.66 mol : ethylene glycol 4.66 mol). Then, phosphoric acid was added at 150°C. The phosphoric acid was added in an amount corresponding to a phosphoric acid content of 100 ppm based on 1 kg of the finally obtained polyester-based resin.

The temperature was raised to 180°C over 30 minutes, and an esterification reaction was carried out at 1.0 kgf/cm$^2$ and 180°C for 2 hours to prepare an oligomer. During this process, by-products (water and methanol) and side reaction products were removed from the system.

Subsequently, the oligomer was polycondensed in a polycondensation reactor in the presence of antimony trioxide at 0.3 torr and 280°C to prepare a polyester-based resin (intrinsic viscosity: 0.68 dl/g, polymerization time: 190 minutes). The antimony trioxide was added in an amount corresponding to an antimony atom content of 300 ppm based on 1 kg of the finally obtained polyester-based resin.

Comparative Example 9

A solution of r-BHET with a concentration of 50 wt% was prepared by mixing r-BHET and water (W).
The r-BHET solution, dimethyl terephthalate, and isosorbide were introduced into an esterification reactor through separate inlets under heating (r-BHET 3.08 mol : dimethyl terephthalate 3.08 mol : isosorbide 3.08 mol). Then, phosphoric acid was added at 150°C. The phosphoric acid was added in an amount corresponding to a phosphoric acid content of 100 ppm based on 1 kg of the finally obtained polyester-based resin.
The temperature was raised to 180°C over 30 minutes, and an esterification reaction was carried out at 1.0 kgf/cm$^2$ and 180°C for 2 hours to prepare an oligomer. During this process, by-products (water and methanol) and side reaction products were removed from the system.
Subsequently, the oligomer was polycondensed in a polycondensation reactor in the presence of antimony trioxide at 0.3 torr and 280°C for 205 minutes to prepare a polyester-based resin (intrinsic viscosity: 0.66 dl/g, polymerization time: 205 minutes). The antimony trioxide was added in an amount corresponding to an antimony atom content of 300 ppm based on 1 kg of the finally obtained polyester-based resin.

Comparative Example 10

A solution of r-BHET with a concentration of 50 wt% was prepared by mixing r-BHET and ethylene glycol (EG).
The r-BHET solution, dimethyl terephthalate, and isosorbide were introduced into an esterification reactor through separate inlets under heating (r-BHET 3.08 mol : dimethyl terephthalate 3.08 mol : isosorbide 3.08 mol). Then, phosphoric acid was added at 150°C. The phosphoric acid was added in an amount corresponding to a phosphoric acid content of 100 ppm based on 1 kg of the finally obtained polyester-based resin.
The temperature was raised to 180°C over 30 minutes, and an esterification reaction was carried out at 1.0 kgf/cm$^2$ and 180°C for 3 hours to prepare an oligomer. During this process, by-products (water and methanol) and side reaction products were removed from the system.
Subsequently, the oligomer was polycondensed in a polycondensation reactor in the presence of antimony trioxide at 0.3 torr and 280°C for 213 minutes to prepare a polyester-based resin (intrinsic viscosity: 0.63 dl/g, polymerization time: 213 minutes). The antimony trioxide was added in an amount corresponding to an antimony atom content of 300 ppm based on 1 kg of the finally obtained polyester-based resin.

Test Example

1) Intrinsic Viscosity of Polyester Resin

The intrinsic viscosity of the polyester resin was measured at room temperature (approximately 25°C) using an Ostwald viscosimeter.
A sample in which the polyester resin was dissolved in a solvent (2-chlorophenol) at a concentration of 0.4 g/100 ml was transferred to the Ostwald viscosimeter. The falling time of the sample was measured using the viscosimeter and an aspirator. The falling time of the solvent was also measured in the same manner. The intrinsic viscosity (IV) value of the polyester resin was calculated using the following Equations 1 and 2. In the equations below, C is the concentration of the sample (g/100 ml).

Relative Viscosity (RV) = [Falling time of the sample] / [Falling time of the solvent]          [Equation 1]

[Equation 2]

$$\text{Intrinsic Viscosity (IV)} = [1/4 \times (RV-1/C)] + [3/4 \times (\ln RV/C)]$$

2) Content of Diethylene glycol (DEG)

1 g of polyester resin and 3 ml of monoethanolamine were placed in a 50 ml container, heated on a hot plate to completely dissolve the polyester resin, and then cooled to 100°C. To this, a solution in which 0.005 g of 1,6-hexanediol was dissolved in 20 ml of methanol was added, followed by the addition of 10 g of terephthalic acid to neutralize. The obtained neutralized solution was filtered using a funnel and filter paper, and the filtrate was analyzed by gas chromatography (GC) to measure the content (wt%) of diethylene glycol (DEG). A GC analyzer (Nexis GC-2030) from Shimadzu Co. was used for the GC analysis, and the measurement was conducted according to the manual of the analyzer.

3) Measurement of Color b* Value

The color b* value of a specimen made of polyester resin was measured using a spectrophotometer (SE-2000, Nippon Denshoku Co.) according to the L*a*b* colorimetric system by CIE LAB.

[Table 1]

|  | Raw Material | Co-reactant | IV (dl/g) | DEG (wt%) | Color b* |
|---|---|---|---|---|---|
| Example 1 | r-BHET melt | - | 0.64 | 0.74 | 4.2 |
| Example 2 | r-BHET melt | AA, EG | 0.62 | 0.69 | 4.4 |
| Example 3 | r-BHET melt | IPA, EG | 0.65 | 0.71 | 4.6 |
| Example 4 | r-BHET melt | AA, IPA, EG | 0.60 | 0.69 | 4.1 |
| Example 5 | r-BHET melt | TPA, NPG | 0.61 | 0.71 | 4.0 |
| Example 6 | r-BHET melt | TPA, ISB | 0.66 | 0.74 | 4.1 |
| Example 7 | r-BHET melt | FDCA, EG | 0.65 | 0.70 | 4.3 |
| Example 8 | r-BHET melt | TPA, CHDM | 0.63 | 0.69 | 4.5 |

\*AA: Adipic acid
\*EG: Ethylene glycol
\*IPA: Isophthalic acid
\*TPA: Terephthalic acid
\*NPG: Neopentyl glycol
\*ISB: Isosorbide
\*FDCA: 2,5-Furandicarboxylic acid
\*CHDM: 1,4-Cyclohexanedimethanol

[Table 2]

|  | Raw Material | Co-reactant | IV (dl/g) | DEG (wt%) | Color b* |
|---|---|---|---|---|---|
| Comparative Example 1 | r-BHET solution (W) | - | 0.61 | 4.1 | 11.1 |
| Comparative Example 2 | r-BHET solution (W) | - | 0.64 | 5.4 | 13.1 |
| Comparative Example 3 | r-BHET solution (EG) | - | 0.68 | 6.7 | 7.9 |
| Comparative Example 4 | r-BHET solution (EG) | - | 0.64 | 5.8 | 8.1 |
| Comparative Example 5 | r-BHET solution (W) | AA, EG | 0.66 | 6.0 | 14.1 |
| Comparative Example 6 | r-BHET solution (W) | IPA, EG | 0.63 | 4.8 | 6.2 |
| Comparative Example 7 | r-BHET solution (EG) | AA, EG | 0.67 | 5.7 | 7.5 |
| Comparative Example 8 | r-BHET solution (EG) | IPA, EG | 0.68 | 4.0 | 7.9 |
| Comparative Example 9 | r-BHET solution (W) | DMT, ISB | 0.66 | 4.5 | 8.3 |
| Comparative Example 10 | r-BHET solution (EG) | DMT, ISB | 0.63 | 4.2 | 6.2 |

\*AA: Adipic acid
\*EG: Ethylene glycol
\*IPA: Isophthalic acid
\*DMT: Dimethyl terephthalate
\*ISB: Isosorbide

Referring to the above examples and comparative examples, it was confirmed that in the preparation method according to the examples, a polyester resin with a low by-product content and a color b* value close to 0 is obtained with a relatively short polycondensation reaction time.

Furthermore, in the preparation method of the examples, dimethyl terephthalate was not used, thereby preventing the generation of methanol as a harmful by-product. Additionally, since an excessive amount of ethylene glycol is not required for the reaction with co-reactants in the reaction system, this method is more advantageous for achieving environmental sustainability.

In contrast, the preparation methods of the comparative examples required relatively long polycondensation reaction times, resulting in a polyester resin with a high by-product content and poor color quality.

As described above, while the present invention has been explained by reference to limited examples, it is not limited thereto. Various modifications and alterations may be made by those skilled in the art to which the present invention belongs, without departing from its technical concept and within the equivalent scope of the claims set forth below.

### Claims

1. A method for preparing a polyester-based resin, comprising:

   preparing a molten liquid by heating chemically recycled bis(2-hydroxyethyl) terephthalate;
   forming an oligomer by heating a composition including the molten liquid and an esterification reaction catalyst; and
   producing the polyester-based resin by polycondensing the oligomer.

2. The method for preparing a polyester-based resin according to Claim 1, wherein the esterification reaction catalyst is phosphoric acid or an organic phosphate.

3. The method for preparing a polyester-based resin according to Claim 1, wherein the composition including the molten liquid and the esterification reaction catalyst further comprises at least one co-reactant selected from the group consisting of a compound having two or more carboxyl functional groups and a compound having two or more hydroxyl functional groups.

4. The method for preparing a polyester-based resin according to Claim 3, wherein the composition comprises the co-reactant in an amount of 0.01 mol to 9.5 mol per 1 mol of the chemically recycled bis(2-hydroxyethyl) terephthalate.

5. The method for preparing a polyester-based resin according to Claim 3, wherein the compound having two or more carboxyl functional groups is at least one compound selected from the group consisting of phthalic acid, isophthalic acid, terephthalic acid, 2,6-naphthalenedicarboxylic acid, biphenyl-4,4'-dicarboxylic acid, 4,4'-cis-stilbenedicarboxylic acid, 2,5-furandicarboxylic acid, 2,5-thiophenedicarboxylic acid, 1,4-cyclohexanedicarboxylic acid, 1,3-cyclohexanedicarboxylic acid, ethanedioic acid, propanedioic acid, fumaric acid, maleic acid, pentanedioic acid, octanedioic acid, decanedioic acid, adipic acid, succinic acid, tricarboxylic acid, trimellitic acid, hemimellitic acid, hemimellitic anhydride, trimesic acid, and tricarballylic acid.

6. The method for preparing a polyester-based resin according to Claim 3, wherein the compound having two or more hydroxyl functional groups is at least one compound selected from the group consisting of ethylene glycol, 1,2-propanediol, 1,3-propanediol, 1,2-butanediol, 1,4-butanediol, 1,5-pentanediol, 1,6-hexanediol, cyclopentanediol, 1,4-cyclohexanediol, 1,2-cyclohexanedimethanol, 1,3-cyclohexanedimethanol, 1,4-cyclohexanedimethanol, 2,2,4-trimethyl-1,3-pentanediol, polyethylene glycol, neopentyl glycol, dipropylene glycol, triethylene glycol, polypropylene glycol, hexylene glycol, pentaethylene glycol, polytetramethylene glycol, dihydroxybenzene, dihydroxynaphthalene, hydroxyquinol, glycerin, pentaerythritol, trimethylolpropane, trimethylolethane, and isosorbide.

7. The method for preparing a polyester-based resin according to Claim 1, wherein the step of forming the oligomer is performed under a pressure of 1.0 kgf/cm$^2$ to 3.0 kgf/cm$^2$ and a temperature of 150°C to 260°C.

8. The method for preparing a polyester-based resin according to Claim 1, wherein the step of producing the polyester-based resin by polycondensing the oligomer is performed under a pressure of 0.01 to 10 torr and a temperature of 150°C to 350°C.

9. The method for preparing a polyester-based resin according to Claim 1, wherein the polycondensation is performed in the presence of at least one compound selected from the group consisting of antimony triacetate, antimony trioxide, antimony tritartrate, antimony glycolate, titanium oxide, titanium chelate compounds, tetra-n-propyl titanate, tetra-isopropyl titanate, tetra-n-butyl titanate, tetra-isobutyl titanate, butyl-isopropyl titanate, and germanium dioxide.

10. A polyester-based resin obtained by the method for preparing a polyester-based resin according to Claim 1, using a molten liquid of chemically recycled bis(2-hydroxyethyl) terephthalate.

11. The polyester-based resin according to Claim 10, wherein the polyester-based resin has an intrinsic viscosity of 0.45 to 0.85 dl/g.

12. The polyester-based resin according to Claim 10, wherein the polyester-based resin contains diethylene glycol as a by-product in an amount of less than 4.0 wt% based on the weight of the polyester-based resin.

13. The polyester-based resin according to Claim 10, wherein the polyester-based resin has a color b* value of less than 6.0 according to the L*a*b* colorimetric system by CIE LAB, as measured using a spectrophotometer on a specimen made of the polyester-based resin.

# EP 4 624 512 A1

## INTERNATIONAL SEARCH REPORT

International application No.

**PCT/KR2023/021499**

### A. CLASSIFICATION OF SUBJECT MATTER

**C08G 63/183**(2006.01)i; **C08G 63/82**(2006.01)i

According to International Patent Classification (IPC) or to both national classification and IPC

### B. FIELDS SEARCHED

Minimum documentation searched (classification system followed by classification symbols)

C08G 63/183(2006.01); C07C 67/52(2006.01); C08G 63/60(2006.01); C08G 63/78(2006.01); C08G 63/91(2006.01); C08J 11/16(2006.01); C08J 3/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생 비스(2-하이드록시에틸) 테레프탈레이트(recycled bis(2-hydroxyethyl) terephthalate), 용융(melt), 올리고머(oligomer), 축중합(polycondensation), 폴리에스테르(polyester)

### C. DOCUMENTS CONSIDERED TO BE RELEVANT

| Category* | Citation of document, with indication, where appropriate, of the relevant passages | Relevant to claim No. |
|---|---|---|
| Y | WO 2021-038512 A1 (KULKARNI, S. T.) 04 March 2021 (2021-03-04)<br>See claims 1-6; and paragraphs [0004]-[0059]. | 1-13 |
| Y | KR 10-2022-0055192 A (SK CHEMICALS CO., LTD.) 03 May 2022 (2022-05-03)<br>See claim 1; and paragraphs [0083]-[0084] and [0086]. | 1-13 |
| A | WO 2022-003990 A1 (SHINTECH CORPORATION et al.) 06 January 2022 (2022-01-06)<br>See entire document. | 1-13 |
| A | KR 10-0330825 B1 (E.I.DU PONT DE NEMOURS AND COMPANY) 06 December 2002 (2002-12-06)<br>See entire document. | 1-13 |
| A | JP 2003-160650 A (IS KK) 03 June 2003 (2003-06-03)<br>See entire document. | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021499**

| Patent document cited in search report | | | Publication date (day/month/year) | Patent family member(s) | | | Publication date (day/month/year) |
|---|---|---|---|---|---|---|---|
| WO | 2021-038512 | A1 | 04 March 2021 | CN | 114599713 | A | 07 June 2022 |
| | | | | US | 2022-0282036 | A1 | 08 September 2022 |
| | | | | WO | 2021-038512 | A8 | 10 March 2022 |
| KR | 10-2022-0055192 | A | 03 May 2022 | CN | 116348527 | A | 27 June 2023 |
| | | | | EP | 4234607 | A1 | 30 August 2023 |
| | | | | JP | 2023-546948 | A | 08 November 2023 |
| | | | | KR | 10-2583652 | B1 | 26 September 2023 |
| | | | | US | 2024-0002593 | A1 | 04 January 2024 |
| | | | | WO | 2022-092558 | A1 | 05 May 2022 |
| WO | 2022-003990 | A1 | 06 January 2022 | CN | 115803377 | A | 14 March 2023 |
| | | | | CN | 115843291 | A | 24 March 2023 |
| | | | | JP | 2022-013942 | A | 18 January 2022 |
| | | | | JP | 2022-022286 | A | 03 February 2022 |
| | | | | JP | 6960709 | B1 | 05 November 2021 |
| | | | | JP | 6986813 | B1 | 22 December 2021 |
| | | | | JP | 7101390 | B2 | 15 July 2022 |
| | | | | KR | 10-2023-0026495 | A | 24 February 2023 |
| | | | | KR | 10-2023-0027276 | A | 27 February 2023 |
| | | | | WO | 2022-004359 | A1 | 06 January 2022 |
| KR | 10-0330825 | B1 | 06 December 2002 | CN | 1070511 | C | 05 September 2001 |
| | | | | CN | 1137278 | A | 04 December 1996 |
| | | | | EP | 0724607 | A1 | 07 August 1996 |
| | | | | EP | 0724607 | B1 | 04 August 1999 |
| | | | | JP | 09-504048 | A | 22 April 1997 |
| | | | | JP | 3287572 | B2 | 04 June 2002 |
| | | | | KR | 10-1996-0704962 | A | 09 October 1996 |
| | | | | US | 5434239 | A | 18 July 1995 |
| | | | | US | 5552513 | A | 03 September 1996 |
| | | | | WO | 95-11268 | A1 | 27 April 1995 |
| JP | 2003-160650 | A | 03 June 2003 | JP | 3684348 | B2 | 17 August 2005 |

Form PCT/ISA/210 (patent family annex) (July 2022)